(19) Europäisches Patentamt
European Patent Office
Office européen des brevets

(11) **EP 2 962 127 B1**

(12) **EUROPÄISCHE PATENTSCHRIFT**

(45) Veröffentlichungstag und Bekanntmachung des Hinweises auf die Patenterteilung:
**28.12.2016  Patentblatt 2016/52**

(21) Anmeldenummer: **14701142.3**

(22) Anmeldetag: **15.01.2014**

(51) Int Cl.:
*G01S 17/10* (2006.01)    *G01S 17/93* (2006.01)
*G01S 7/486* (2006.01)    *G01S 7/487* (2006.01)
*G01S 17/89* (2006.01)    *G01S 17/36* (2006.01)

(86) Internationale Anmeldenummer:
**PCT/EP2014/000082**

(87) Internationale Veröffentlichungsnummer:
**WO 2014/131483 (04.09.2014 Gazette 2014/36)**

(54) **VERFAHREN ZUR ERMITTLUNG EINES ABSTANDS EINES OBJEKTS ZU EINEM KRAFTFAHRZEUG UNTER BENUTZUNG EINES PMD-SENSORS**

METHOD FOR ASCERTAINING A DISTANCE OF AN OBJECT FROM A MOTOR VEHICLE USING A PMD SENSOR

PROCÉDÉ DE DÉTERMINATION D'UNE DISTANCE D'UN OBJET PAR RAPPORT À UN VÉHICULE À MOTEUR EN UTILISANT UN CAPTEUR PMD

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.02.2013   DE 102013003186**

(43) Veröffentlichungstag der Anmeldung:
**06.01.2016   Patentblatt 2016/01**

(73) Patentinhaber: **Audi AG**
**85045 Ingolstadt (DE)**

(72) Erfinder: **POLLMER, Jens**
**85375 Neufahrn b. Freising (DE)**

(74) Vertreter: **Thielmann, Frank**
**AUDI AG**
**Patentabteilung**
**85045 Ingolstadt (DE)**

(56) Entgegenhaltungen:
**WO-A1-01/55746      DE-A1-102010 003 409
US-A- 3 298 024      US-A- 3 652 161
US-A- 3 730 628      US-A- 5 745 437
US-A1- 2011 188 028      US-A1- 2012 257 186**

**Beschreibung**

Die Erfindung betrifft ein Verfahren zur Ermittlung eines Abstands eines Objekts zu einem Kraftfahrzeug unter Verwendung eines PMD-Sensors und einen PMD-Sensor.

PMD-Sensoren (Photonic Mixing Device-Sensor, oft auch als Photomischdetektor bezeichnet) sind im Stand der Technik inzwischen wohlbekannte optische Sensoren, deren Funktionsprinzip auf dem Lichtlaufzeitverfahren (time of flight) beruht. Ein von einer Signalquelle ausgesendetes Messsignal wird an einem Objekt reflektiert und von einem Signaldetektor wieder aufgefangen. Dabei werden üblicherweise mit einer Modulationsfrequenz modulierte Licht-Messsignale eingesetzt, wobei durch Vergleich des ausgesendeten mit dem wiederempfangenen Messsignal eine Phasenverschiebung ermittelt wird. Aus dieser Phasenverschiebung lassen sich Abstände zu dem Objekt berechnen, wobei allerdings, da die Phasenverschiebung betrachtet wird, eine Nichteindeutigkeit besteht, da jeder um ein Vielfaches der der Modulationsfrequenz zugehörigen Modulationswellenlänge modifizierte Abstand zur selben Phasenverschiebung führt.

Die Verwendung niedriger Modulationsfrequenzen ist dabei üblicherweise nicht erwünscht, obwohl lange Wellenlängen vorliegen, jedoch wird die Messung und daher die Dauer eines Messzyklus deutlich verlängert, so dass Abstandsmessungen nicht mit der gewünschten Frequenz zur Verfügung stehen. Die Verwendung hoher Frequenzen jedoch hat eine Vielzahl von Vorteilen, nachdem die Gesamteffizienz des PMD-Sensors mit steigender Frequenz ebenso steigt. Insbesondere lassen sich Ortsauflösung und Reichweite des Messsignals steigern. Dabei besteht jedoch das Problem, dass mit höheren Frequenzen ein an dem Kraftfahrzeug beginnender Reichweitenbereich, in dem eine eindeutige Ermittlung eines Abstands aus der Phasenverschiebung möglich ist, entsprechend kleiner wird. Ein weiteres Problem ist, dass bei üblichen Ausleuchtungsstärken, die auf einen solchen Reichweitenbereich bzw. Eindeutigkeitsbereich abgestimmt sind, dennoch stark reflektierende Objekte in größeren Abständen, beispielsweise sogenannte Retroreflektoren, ein Signal erzeugen können, welches unter Berücksichtigung nur des nächstgelegenen möglichen Abstands aufgrund der Phasenverschiebung ein falsches Signal erzeugen kann.

Zur Lösung dieser Problematik wurde bei Anwendungen mit großen Erkennungsbereichen vorgeschlagen, eine Vergrößerung des Reichweitenbereichs durch die Kombination mehrerer Frequenzen zu erreichen. Dabei wird in einem Messzyklus das Messsignal mit mehreren unterschiedlichen Modulationsfrequenzen, beispielsweise drei Modulationsfrequenzen, moduliert, und es werden entsprechend Phasenverschiebungen für jede Modulationsfrequenz bestimmt. Aus diesen Phasenverschiebungen folgen eine Mehrzahl möglicher Abstände, wie oben erläutert. Nur Abstände, die für alle Phasenverschiebungen bestimmt wurden, sind mögliche Lösungen, so dass je nach Wahl der verschiedenen Modulationsfrequenzen der Reichweitenbereich, in dem eine eindeutige Ermittlung eines Abstands möglich ist, erweitert werden kann.

Diese Lösung hat allerdings den Nachteil, dass durch die Anzahl der Modulationsfrequenzen die Zeit bis zur sicheren (eindeutigen) Erkennung eines Abstands eines Objekts durch die erforderlichen Belichtungszeiten bestimmt wird. Es ergibt sich eine deutliche Verlängerung des Messzyklus. Gleichzeitig wird diese Lösung durch die Auswahl der möglichen Frequenzen, insbesondere der oberen Maximalfrequenz, begrenzt. Diese Begrenzung verhindert die optimale Kombination aus Lichtmenge und Modulationsfrequenz.

DE 10 2010 003 409 A1 betrifft eine Lichtlaufzeit-Kamera. Dabei wird eine Phasenverschiebung für wenigstens drei verschiedene Modulationsfrequenzen gemessen und es werden Differenzen der Phasenverschiebungen benachbarter Modulationsfrequenzen gebildet. Damit liegen wenigstens zwei unabhängige Phasendifferenzen vor, die ausgewertet werden können. So soll auch der Eindeutigkeitsbereich erweitert werden.

US 3,652,161 betrifft ein Verfahren und eine Anordnung zur optischen Vermessung von Distanzen mit hoher Präzision. Dabei wird eine grobe Messung über die Laufzeit vorgenommen und eine präzise Messung über ein Messsignal, das kurz relativ zum Abstand ist, durchgeführt. Die Mehrdeutigkeit zwischen der Zahl der Wellenlängen zwischen direktem und reflektiertem Signal wird durch die grobe Messung ausgelöst.

US 5,745,437 betrifft ein Verfahren und eine Vorrichtung zur Entfernungsmessung über kohärente Bursts. Es findet eine hochfrequente Modulation eines guasikontinuierlich in Bursts ausgesandten Signals statt und das im empfangenen Signal enthaltene Burst-Muster wird analysiert, wobei zur Entfernungsbestimmung Laufzeit und Phasenverschiebung genutzt werden.

Der Erfindung liegt daher die Aufgabe zugrunde, eine Möglichkeit zur Abstandsbestimmung mit einem PMD-Sensor anzugeben, der bei Nutzung hoher Modulationsfrequenzen ohne zu starke Verlängerung der Dauer des Messzyklus eine Eindeutigkeit und erhöhte Flexibilität bei der Gestaltung des konkreten Messvorgangs erlaubt.

Zur Lösung dieser Aufgabe sind bei einem Verfahren der eingangs genannten Art folgende Schritte vorgesehen:

- in einem Messzyklus Messung einer Phasenverschiebung eines an dem Objekt reflektierten Messsignals für wenigstens eine Modulationsfrequenz, wobei die Modulationsfrequenz derart gewählt wird, dass in einem an dem Kraftfahrzeug beginnenden Reichweitenbereich eine eindeutige Ermittlung eines Abstands aus der Phasenverschiebung möglich ist, und

- Durchführen einer Laufzeitmessung für ein an dem Objekt reflektiertes Einzelsignal während eines mit dem Aussenden des Einzelsignals beginnenden und an einem dem zweifachen Durchlaufen des Reichweitenbereichs entsprechenden Zeitpunkt endenden Zeitintervalls, wobei die Phasenverschiebungsmessung und die Laufzeitmessung nacheinander erfolgen,

- falls ein reflektiertes Einzelsignal während des Zeitintervalls gemessen wurde, Ermittlung eines Abstands aus der Phasenverschiebung,
- falls kein reflektiertes Einzelsignal während des Zeitintervalls gemessen wurde, Verwerfen der Phasenverschiebung ohne Ermittlung eines Abstands.

Die Grundidee der vorliegenden Erfindung ist es, die bisherige Bestimmung eines Abstands um eine Art "Sonar"-Verfahren zu erweitern, welches lediglich die Eindeutigkeit für einen Reichweitenbereich sicherstellt. Dabei sind an die Laufzeitmessung keinerlei höhere Anforderungen zu stellen, da die Laufzeitmessung nur dazu dient, möglichst sicherzustellen, dass ein im Rahmen der Messung der Phasenverschiebung aufgenommenes Signal auch tatsächlich im Reichweitenbereich liegt. Es wird also ein Messzyklus vorgeschlagen, in dem zusätzlich zum klassischen Modulationsschema und Messen des Messsignals, ein zusätzlicher Lichtimpuls, das Einzelsignal, über die vorhandene Signalquelle (PMD-Beleuchtungseinrichtung) ausgesendet wird. Während eines gezielt gewählten Zeitintervalls wird geprüft, ob das Einzelsignal, welches einen oder mehrere Pulse umfassen kann, wieder empfangen wurde. Wird ein PMD-Sensor mit mehreren Pixeln verwendet, so wird dieser Messzyklus selbstverständlich für alle Pixel durchgeführt. Auf diese Weise lassen sich die Pixel identifizieren, deren Messwert für die Phasenverschiebung aus dem relevanten Reichweitenbereich stammt.

Dabei ist es, wie bereits erwähnt, nicht erforderlich, die Distanz über die Laufzeitmessung genau zu bestimmen, so dass ohne (starken) Eingriff in die Architektur heutige PMD-Sensoren verwendet werden können. Nachdem gemessene Phasenverschiebungen, für die im Zeitintervall keine Reflektion des Einzelsignals gemessen wurde, verworfen werden, wird letztlich eine Ausblendung des auf den Reichweitenbereich folgenden Entfernungsbereichs realisiert, wobei das Zeitintervall entsprechend zu dimensionieren ist.

Beispielsweise ist für einen Reichweitenbereich zur eindeutigen Bestimmung eines Abstands von $x_{max}$ aus dem bekannten Zusammenhang

$$x_{max} = t_{max} \cdot c \cdot 2$$

herleitbar, dass die Ausdehnung des Zeitintervalls

$$t_{max} = x_{max}/(2 \cdot c)$$

betragen muss. Weist der Reichweitenbereich eine Länge von 50 m auf, ergibt sich beispielsweise ein Zeitintervall einer Länge von 83 ns.

Ausgehend davon, dass als Designkriterium für einen PMD-Sensor eine Länge des Reichweitenbereichs, also $x_{max}$, vorgegeben wird, lassen sich also durch die zusätzliche Laufzeitmessung jenseits dieses Reichweitenbereichs liegende Reflexionen gezielt ausblenden. Die Eindeutigkeit, die sich durch die wenigstens eine Modulationsfrequenz ergibt, lässt sich dann also gezielt auf den Reichweitenbereich beschränken, so dass sich beispielsweise bei der Verwendung von mehreren Modulationsfrequenzen eine deutliche Erhöhung derselben erreichen lässt, was die eingangs genannten Vorteile mit sich bringt. Alternativ kann die Eindeutigkeit im Reichweitenbereich mit weniger Modulationsfrequenzen, insbesondere nur einer Modulationsfrequenz, erreicht werden, so dass die Dauer eines Messzyklus deutlich reduziert werden kann. Insgesamt ermöglicht das erfindungsgemäße Betriebsverfahren für einen PMD-Sensor zur Messung des Abstandes wenigstens eines Objekts eine deutlich größere Flexibilität bei der Auslegung des Gesamtsystems. Wird mit einer kleineren Anzahl von Modulationsfrequenzen gearbeitet, ergeben sich kürzere Messzyklen. Zudem kann dann auf Belichtungen verzichtet werden, so dass sich auch die Zeitdauer der Belastung von in den Signalquellen häufig vorgesehenen Leuchtdioden verringern lässt. Dies ermöglicht beispielsweise eine stärkere Pulsleistung der Leuchtdioden, so dass auch auf diese Weise höhere Systemreichweiten erzielt werden können. Andererseits ist es aber auch möglich, bei der Verwendung von mehreren Modulationsfrequenzen die Systemfrequenzen zu erhöhen, so dass sich eine verbesserte Effizienz und auch Ortsauflösung ergibt.

In weiterer Ausgestaltung der vorliegenden Erfindung kann vorgesehen sein, dass der das Ende des Zeitintervalls definierende Zeitpunkt unter Berücksichtigung von Messungenauigkeiten und einer vorgegebenen Sollreichweite derart bestimmt wird, dass ein durch die Standardabweichungen definierter Abstandsbereich außerhalb der innerhalb des Reichweitenbereichs liegenden Sollreichweite liegt, insbesondere an diese anschließt. Wie bereits erwähnt wurde, ist es im Rahmen der vorliegenden Erfindung nicht notwendig, eine hochgenaue Laufzeitmessung durchzuführen, da diese letztlich nur zum Ausblenden ungewollter Entfernungsbereiche dient. Ist nun also, beispielsweise als Designkriterium, eine Sollreichweite vorgegeben, innerhalb der eine eindeutige Abstandsbestimmung erfolgen soll, lassen sich der Reichweitenbereich und das Zeitintervall so legen, dass die Zahl von Messfehlern äußerst gering gehalten wird. Ist also beispielsweise eine Sollreichweite von 50 m gefordert, beträgt die Ungenauigkeit der Laufzeitmessung, beschrieben durch die Standardabweichung, +/- 5 m, ist es zweckmäßig, einen Reichweitenbereich einer Ausdehnung von 55 m zu wählen, da dann der durch die Standardabweichungen definierte Abstandsbereich um den maximalen eindeutig bestimmbaren Abstand an die Sollreichweite anschließt.

Wie bereits erwähnt wurde, kann es in konkreten Ausgestaltungen der vorliegenden Erfindung vorteilhaft sein, wenn Phasenverschiebungen für mehr als eine Modulationsfrequenz gemessen werden. Dabei sind verschiedene Möglichkeiten zur Nutzung der weiteren gemessenen Phasenverschiebungen denkbar.

Zum einen ist es möglich, dass wenigstens zwei der Modulationsfrequenzen zur Definition des Reichweitenbereichs eingesetzt werden. Auf diese Weise können vorteilhaft sehr hohe Frequenzen gewählt werden, so dass sich durch die Verwendung von wenigstens zwei unterschiedlichen Modulationsfrequenzen dennoch ein hinreichend großer Reichweitenbereich ergibt, in dem eindeutig anhand der Phasenverschiebungen ein Abstand ermittelt werden kann. Dabei handelt es sich dann, wie dargelegt wurde, um den innerhalb des Reichweitenbereichs übereinstimmenden möglichen Wert für die Abstände, wie sie aus den einzelnen Phasenverschiebungen berechnet werden können.

Alternativ oder zusätzlich ist es jedoch auch möglich, dass wenigstens eine der Modulationssequenzen zur Plausibilisierung eines aufgrund der Phasenverschiebungen der anderen Modulationsfrequenzen ermittelten Abstands verwendet wird. Es ist also auch denkbar, wenigstens eine Modulationsfrequenz und somit eine gemessene Phasenverschiebung zu verwenden, um einen aus der wenigstens einen anderen Phasenverschiebung bestimmten Wert für den Abstand zusätzlich zu pausibilisieren, um die Zuverlässigkeit der Messung weiter zu verbessern.

In einer vorteilhaften Weiterbildung des Erfindungsgegenstands wird bei der Laufzeitmessung eine Amplitude des Einzelsignals gemessen, wobei die Amplitude bei der Belichtungssteuerung beim Aussenden des Messsignals berücksichtigt wird. In dieser Ausführungsform wird also die Amplitude des empfangenen Einzelsignals betrachtet, woraus sich vorteilhaft Rückschlüsse auf die Belichtungssteuerung ziehen lassen. Auf diese Weise können beispielsweise die notwendigen Belichtungen (also Messungen) weiter reduziert werden.

Neben dem Verfahren betrifft die vorliegende Erfindung auch einen PMD-Sensor, der eine zur Durchführung des erfindungsgemäßen Verfahrens ausgebildete Steuereinrichtung aufweist. Wie üblich ist mithin eine Lichtquelle (PMD-Beleuchtungseinrichtung) vorgesehen, die eine oder mehrere Leuchtdioden, selbstverständlich jedoch auch andere geeignete Lichtquellen, enthalten kann und insbesondere für verschiedene Pixel des PMD-Sensors Messsignale und Einzelsignale aussenden kann. Eine Detektionseinrichtung, beispielsweise eine Kamera, dient zum Empfang reflektierter Signale. Sämtliche Ausführungen bezüglich des erfindungsgemäßen Verfahrens lassen sich analog auf den erfindungsgemäßen PMD-Sensor übertragen, mit welchem mithin ebenso die genannten Vorteile erreicht werden können.

Weitere Vorteile und Einzelheiten der vorliegenden Erfindung ergeben sich aus den im Folgenden beschriebenen Ausführungsbeispielen sowie anhand der Zeichnung. Dabei zeigen:

Fig. 1 eine Skizze zur Wirkungsweise des erfindungsgemäßen Verfahrens,

Fig. 2 einen Ablaufplan des erfindungsgemäßen Verfahrens,

Fig. 3 einen beispielhaften Messzyklus beim erfindungsgemäßen Verfahren,

Fig. 4 eine Skizze zur Laufzeitmessung und zu deren Auswertung, und

Fig. 5 eine vereinfachte Prinzipskizze eines erfindungsgemäßen PMD-Sensors.

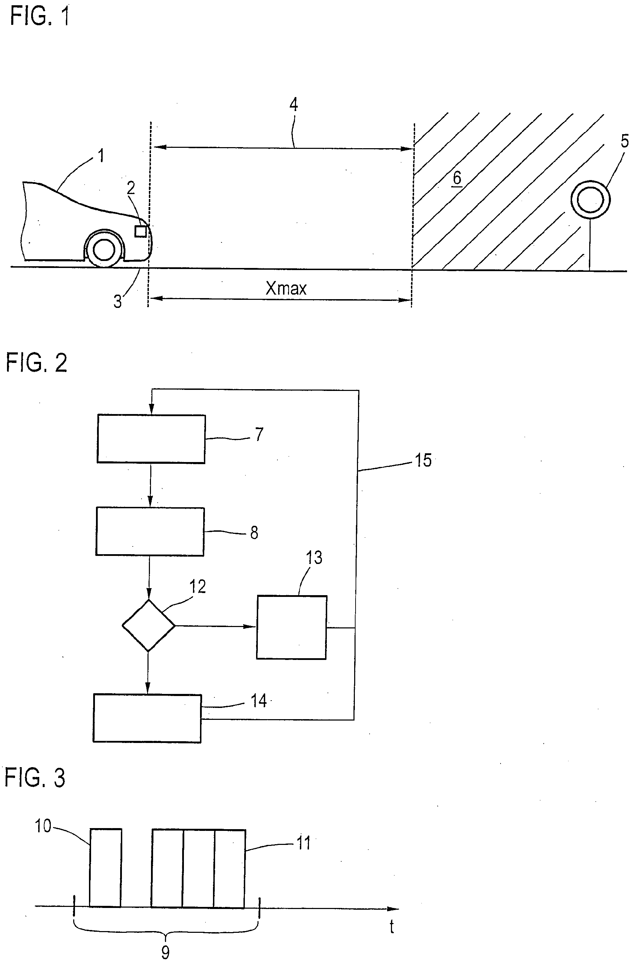

Das Prinzip der vorliegenden Erfindung sei zunächst im Hinblick auf Fig. 1 näher erläutert. Dort ist ein Kraftfahrzeug 1 mit einem PMD-Sensor 2 auf einer Strecke 3 gezeigt. Der PMD-Sensor 2 misst dabei Phasenverschiebungen eines mit wenigstens einer Modulationsfrequenz modulierten Messsignals, welches von einer entsprechenden Signalquelle, beispielsweise umfassend eine Leuchtdiode oder eine andere PMD-geeignete Lichtquelle, ausgesendet wird und von einer Detektionseinrichtung, beispielsweise einer Kamera, wieder empfangen wird. Nun ist es üblich, die wenigstens eine Modulationsfrequenz so zu wählen, dass eine Eindeutigkeit der Abstandsbestimmung aus der wenigstens einen der wenigstens einen Modulationsfrequenz zugeordneten Phasenverschiebung in einem Reichweitenbereich 4 eindeutig ist. Die Ausleuchtung des vor dem Kraftfahrzeug 1 liegenden Bereichs durch die Signalquelle kann dann so eingestellt werden, dass zumindest von üblichen Objekten keine oder kaum Reflexionssignale über den Reichweitenbereich 4 hinaus empfangen werden. Nichtsdestotrotz existieren stark reflektierende Objekte, beispielsweise Retroreflektoren 5, die über sehr weite Strecken ein reflektiertes Messsignal zurückliefern können, beispielsweise auf Entfernungen von 500 - 700 m. Daher sieht das erfindungsgemäße Verfahren zum Betrieb des PMD-Sensors 2 zusätzlich zu den üblichen Phasenverschiebungsmessungen eine Laufzeitmessung mit einem Einzelsignal vor, welche jedoch nur zum Ausschluss außerhalb des Reichweitenbereichs 4 liegender Ausschlussbereiche 6, in Fig. 1 schraffiert gezeichnet, eingesetzt wird. Eine solche Möglichkeit, Ausschlussbereiche 6 gezielt der Betrachtung zu entziehen, erhöht die Flexibilität für die Gestaltung der Phasenverschiebungsmessung mit den Messsignalen. Der Ausschlussbereich 6 wird ausgeblendet, so dass die Anforderung an die Eindeutigkeit nur für den eine Sollreichweite umfassenden Reichweitenbereich 4 besteht, so dass beispielsweise weniger Modulationsfrequenzen eingesetzt werden können, höhere Modulationsfrequenzen verwendet werden können und dergleichen.

Fig. 2 zeigt einen Ablaufplan des erfindungsgemäßen Verfahrens zur Messung des Abstands eines Objekts. Üblicherweise weisen PMD-Sensoren 2 eine große Menge an einzelnen Pixeln auf, für welche selbstverständlich jeweils das erfindungsgemäße Verfahren durchgeführt wird, worauf im Folgenden auch noch näher eingegangen werden wird.

In einem Schritt 7 findet wie grundsätzlich bekannt die Messung der Phasenverschiebungen statt, indem ein Messsignal mit wenigstens einer Modulationsfrequenz moduliert und ausgesendet wird. Das reflektierte Messsignal wird entsprechend empfangen und es wird eine Phasenverschiebung ermittelt. Aus der Phasenverschiebung für jede verwendete Modulationsfrequenz lässt sich innerhalb des Reichweitenbereichs 4, wie dargelegt, eindeutig ein Abstand ermitteln.

In einem Schritt 8 wird dann eine Laufzeitmessung durchgeführt. Dies geschieht so, dass ein Einzelsignal, welches ein oder mehrere Pulse umfassen kann, von der Signalquelle ausgesendet wird. Nun wird aber nicht eine exakte Laufzeit gemessen, sondern es wird überprüft, ob innerhalb eines definierten Zeitintervalls seit Aussenden des Einzelsignals eine Reflektion, also ein reflektiertes Einzelsignal, zurückempfangen wird. Die Größe des Zeitintervalls bestimmt sich letztlich anhand des Reichweitenbereichs 4, so dass beispielsweise dann, wenn der Reichweitenbereich eine Ausdehnung $x_{max}$, vgl. Fig. 1, haben soll, sich die Dauer des Zeitintervalls gemäß der bekannten Laufzeitzusammenhänge für elektromagnetische Strahlung zu $t_{max} = x_{max}/(2 \cdot c)$ ergibt. Für $x_{max}$ = 50 m ergibt sich dabei beispielsweise eine Dauer des Zeitintervalls von 83 ns.

Nachdem keine genauen Zeitmessungen erforderlich sind, sondern lediglich ein Zeitintervall betrachtet wird, sind die Anforderungen an die Genauigkeit der Laufzeitmessung und die Synchronisierung eher gering. Ungenauigkeiten, die im Rahmen der Laufzeitmessung bestehen, können durch eine entsprechende Anpassung des Zeitintervalls und des Reichweitenbereichs 4 im Hinblick auf die Sollreichweite vorgenommen werden.

Durch die Schritte 7 und 8 ergibt sich mithin ein Messzyklus 9, der durch Fig. 3 schematisch dargestellt ist, wobei die Reihenfolge der Phasenverschiebungsmessung und der Laufzeitmessung letztlich irrelevant ist, weshalb in Fig. 3 auch zunächst die Laufzeitmessung 10 und danach die Phasenverschiebungsmessung 11 mit drei Anteilen für drei Modulationsfrequenzen gezeigt ist.

In einem Schritt 12 wird dann überprüft, ob innerhalb des Zeitintervalls ein reflektiertes Einzelsignal in Schritt 8 empfangen wurde. Ist dies der Fall, wird angenommen, dass gemessene Phasenverschiebungen des jeweiligen Pixels nicht aus dem Ausschlussbereich 6 stammen, sondern aus dem Reichweitenbereich 4, so dass in einem Schritt 13 eine Ermittlung eines Abstandes aus der wenigstens einen Phasenverschiebung wie grundsätzlich bekannt erfolgt. Wird jedoch kein reflektiertes Einzelsignal im Zeitintervall gemessen, werden die Phasenverschiebungen für dieses Pixel verworfen, Schritt 14.

Unabhängig vom Ergebnis der Überprüfung beginnt sodann der nächste Messzyklus, Pfeil 15.

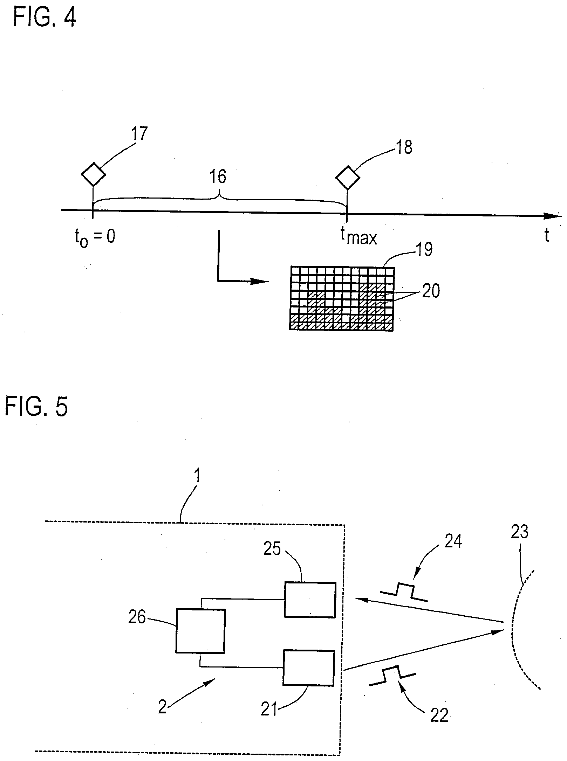

Das Prinzip der Erfindung sei durch Fig. 4 nochmals näher erläutert. Gezeigt ist dort das Zeitintervall 16 vom Zeitpunkt 17 der Aussendung des Einzelsignals bis zum Zeitpunkt 18, der sich entsprechend wie beschrieben aus der Dauer $t_{max}$ ergibt. Diese Messung wird für jedes Pixel durchgeführt, so dass sich, wie schematisch anhand der Detektorfläche 19 mit verschiedenen Pixeln 20 dargestellt, für jedes Pixel 20 in Schritt 9 die Entscheidung ergibt, ob aus seiner wenigstens einen Phasenverschiebung ein Abstand ermittelt wird. In Fig. 4 sind beispielhaft Pixel 20, für die innerhalb des Zeitintervalls 16 ein reflektiertes Einzelsignal empfangen wurde, schraffiert dargestellt.

Wie beschrieben, erlaubt es das erfindungsgemäße Verfahren, die Anforderungen an den Reichweitenbereich 4 zu minimieren und mithin das Messverfahren bezüglich der Phasenverschiebungen flexibler auszugestalten. So können weniger Modulationsfrequenzen eingesetzt werden, wobei es jedoch auch denkbar ist, dennoch weiterhin mehrere Modulationsfrequenzen zu verwenden, die dann bei höheren Werten liegen und somit eine effizientere Messung erlauben. Werden mehrere Modulationsfrequenzen verwendet, können wenigstens zwei der Phasenverschiebungen dieser Modulationsfrequenzen zur Ermittlung von Abständen berücksichtigt werden, zusätzlich oder alternativ ist es jedoch auch denkbar, wenigstens eine Modulationsfrequenz beziehungsweise deren gemessene Phasenverschiebung zur Verifizierung eines aus den anderen Modulationsfrequenzen zugeordneten Phasenverschiebungen ermittelten Abstands einzusetzen.

Es sei schließlich noch darauf hingewiesen, dass im Schritt 8 des Verfahrens auch eine Amplitude des reflektierten Einzelsignals vermessen werden kann. Diese Amplitude erlaubt eine Aussage darüber, ob die Amplitude des ausgesendeten Einzelsignals in einem zweckmäßigen Wertebereich liegt oder ob die Belichtungssteuerung, auch für die Messsignale, angepasst werden kann. Werden reflektierte Einzelsignale, die ja aus dem Reichweitenbereich 4 stammen, beispielsweise alle mit sehr hoher Amplitude gemessen, ist dies ein Hinweis darauf, dass die Leuchtstärke in der Signalquelle zu hoch eingestellt ist und reduziert werden kann. Auch andere Schlussfolgerungen können selbstverständlich aus der Amplitude gezogen werden.

Fig. 5 zeigt schließlich eine Prinzipskizze des in dem nur angedeuteten Kraftfahrzeug 1 verbauten PMD-Sensors 2. Wie grundsätzlich bekannt, umfasst dieser eine Signalquelle 21, die wenigstens eine Leuchtdiode zum Erzeugen des entsprechenden Lichtsignals verwenden kann. Ein von der Signalquelle 21 ausgesendetes Signal 22 wird gegebenenfalls an einem nur angedeuteten Objekt 23 reflektiert, so dass ein reflektiertes Signal 24 in einer Detektionseinrichtung 25, hier einer Kamera, des PMD-Sensors 2 empfangen werden kann. Die Ansteuerung der Komponenten 21, 25 und die Auswertung der Messungen findet in einer Steuereinrichtung 26 statt, die entsprechend zur Durchführung des erfindungsgemäßen Verfahrens ausgebildet ist.

**Patentansprüche**

1. Verfahren zur Ermittlung eines Abstands eines Objekts (23) zu einem Kraftfahrzeug (1) unter Verwendung eines PMD-Sensors (2), umfassend folgende Schritte:

    - in einem Messzyklus (9) Messung einer Phasenverschiebung eines an dem Objekt (23) reflektierten Messsignals für wenigstens eine Modulationsfrequenz, wobei die Modulationsfrequenz derart gewählt wird, dass in einem an dem Kraftfahrzeug (1) beginnenden Reichweitenbereich (4) eine eindeutige Ermittlung eines Abstands aus der Phasenverschiebung möglich ist, und
    - Durchführen einer Laufzeitmessung für ein an dem Objekt (23) reflektiertes Einzelsignal während eines mit dem Aussenden des Einzelsignals beginnenden und an einem dem zweifachen Durchlaufen des Reichweitenbereichs (4) entsprechenden Zeitpunkt endenden Zeitintervalls 16), wobei die Phasenverschiebungsmessung und die Laufzeitmessung nacheinander erfolgen,
    - falls ein reflektiertes Einzelsignal während des Zeitintervalls (16) gemessen wurde, Ermittlung eines Abstands aus der Phasenverschiebung,
    - falls kein reflektiertes Einzelsignal während des Zeitintervalls (16) gemessen wurde, Verwerfen der Phasenverschiebung ohne Ermittlung eines Abstands.

2. Verfahren nach Anspruch 1,
   **dadurch gekennzeichnet,**
   **dass** der das Ende des Zeitintervalls (16) definierende Zeitpunkt unter Berücksichtigung von Messungenauigkeiten und einer vorgegebenen Sollreichweite derart bestimmt wird, dass ein durch die Standardabweichungen definierter Abstandsbereich außerhalb der innerhalb des Reichweitenbereichs (4) liegenden Sollreichweite liegt, insbesondere an diese anschließt.

3. Verfahren nach Anspruch 1 oder 2,
   **dadurch gekennzeichnet,**
   **dass** Phasenverschiebungen für mehr als eine Modulationsfrequenz gemessen werden.

4. Verfahren nach Anspruch 3,

   **dadurch gekennzeichnet,**
   **dass** wenigstens zwei der Modulationsfrequenzen zur Definition des Reichweitenbereichs (4) eingesetzt werden.

5. Verfahren nach Anspruch 3 oder 4,
   **dadurch gekennzeichnet,**
   **dass** wenigstens eine der Modulationsfrequenzen zur Plausibilisierung eines aufgrund der Phasenverschiebungen der anderen Modulationsfrequenzen ermittelten Abstands verwendet wird.

6. Verfahren nach einem der vorangehenden Ansprüche,
   **dadurch gekennzeichnet,**
   **dass** bei der Laufzeitmessung eine Amplitude des Einzelsignals gemessen wird, wobei die Amplitude bei der Belichtungssteuerung beim Aussenden des Messsignals und/oder eines weitere Einzelsignals berücksichtigt wird.

7. PMD-Sensor (2), umfassend eine zur Durchführung eines Verfahrens nach einem der vorangehenden Ansprüche ausgebildete Steuereinrichtung (26).

**Claims**

1. Method for determining a distance of an object (23) from a motor vehicle (1) using a PMD sensor (2), comprising the following steps:

    - during a measurement cycle (9), measuring a phase shift of a measurement signal reflected on the object (23) for at least one modulation frequency, wherein the modulation frequency is selected in such a way that, in a coverage area (4) beginning at the motor vehicle (1), a distance can be unambiguously determined from the phase shift, and
    - carrying out a time-of-flight measurement for an individual signal reflected on the object (23) during a time interval (16) beginning with the emission of the individual signal and ending at a time corresponding to a double passage through the coverage area (4), wherein the phase shift measurement and the time-of-flight measurement follow one another,
    - if a reflected individual signal has been measured during the time interval (16), determining a distance from the phase shift,
    - if no reflected individual signal has been measured during the time interval. (16), discarding the phase shift without determining a distance.

2. Method according to Claim 1, **characterised in that** the time defining the end of the time interval (16) is specified by considering measurement accuracies and a predetermined target range, in such a way that a distance range defined by the standard deviations, lies outside of the target range lying within the coverage area (4), in particular connects with these.

3. Method according to Claim 1 or 2, **characterised in that** the phase shifts are measured for more than one modulation frequency.

4. Method according to Claim 3, **characterised in that** at least two of the modulation frequencies are used to define the coverage area (4).

5. Method according to Claim 3 or 4, **characterised in that** at least one of the modulation frequencies is used to check the plausibility of a distance determined on the basis of the phase shifts of the other modulation frequency.

6. Method according to any one of the preceding claims, **characterised in that** during the time-of-flight measurement, an amplitude of the individual signal is measured, wherein the amplitude is taken into account during the exposure control during emission of the measurement signal and/or of a further individual signal.

7. PMD sensor (2), comprising a control unit (26) designed for carrying out a method according to one of the preceding claims.

**Revendications**

1. Procédé pour la détermination d'une distance d'un objet (23) à un véhicule à moteur (1) en utilisant un capteur PMD (2), comprenant les étapes suivantes :

   - dans un cycle de mesure (9), la mesure d'un déphasage d'un signal de mesure réfléchi au niveau de l'objet (23) pour au moins une fréquence de modulation, dans lequel la fréquence de modulation est choisie de telle manière que, dans une zone de couverture (4) partant du véhicule à moteur (1), une détermination claire d'une distance est possible à partir du déphasage, et
   - la réalisation d'une mesure du temps de parcours pour un signal unique réfléchi au niveau de l'objet (23) au cours d'un intervalle de temps (16) partant de l'envoi du signal unique et se terminant au moment correspondant au double parcours de la zone de couverture (4), dans lequel la mesure du déphasage et la mesure de la durée de parcours se font l'une après l'autre,
   - si un signal unique réfléchi a été mesuré au cours de l'intervalle de temps (16), la détermination d'une distance à partir du déphasage,
   - si aucun signal unique réfléchi n'a été mesuré au cours de l'intervalle de temps (16), le rejet du déphasage sans détermination d'une distance.

2. Procédé selon la revendication 1, **caractérisé en ce que** le moment définissant la fin de l'intervalle de temps (16) est déterminé en tenant compte d'imprécisions de mesure et d'une couverture théorique prédéterminée de telle manière qu'une plage de distances définie par les écarts types se situe en dehors de la couverture théorique se trouvant à l'intérieur de la zone de couverture (4), en particulier est contiguë à celle-ci.

3. Procédé selon la revendication 1 ou 2, **caractérisé en ce que** les déphasages sont mesurés pour plus d'une fréquence de modulation.

4. Procédé selon la revendication 3, **caractérisé en ce qu'**au moins deux des fréquences de modulation sont employées pour la définition de la zone de couverture (4).

5. Procédé selon la revendication 3 ou 4, **caractérisé en ce qu'**au moins une des fréquences de modulation est utilisée pour la plausibilité d'une distance déterminée sur la base des déphasages des autres fréquences de modulation.

6. Procédé selon l'une quelconque des revendications précédentes, **caractérisé en ce que** lors de la mesure du temps de parcours, une amplitude du signal unique est mesurée, dans lequel l'amplitude est prise en compte dans la commande de l'éclairage lors de l'envoi du signal de mesure et/ou d'un autre signal unique.

7. Capteur PMD (2) comprenant un dispositif de commande (26) réalisé pour la mise en oeuvre d'un procédé selon l'une quelconque des revendications précédentes.

FIG. 1

4

1

2

6

5

3

Xmax

FIG. 2

7

8

15

12

13

14

FIG. 3

10

11

9

t

FIG. 4

FIG. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010003409 A1
- US 3652161 A

- US 5745437 A